# EUROPEAN PATENT APPLICATION

(11) **EP 4 715 926 A1**
(43) Date of publication of application: **25.03.2026**
(21) Application number: 24201890.1
(22) Date of filing: 23.09.2024
(51) Int. Cl.: H01M 10/052, H01M 10/0565, C08F 8/32, C08F 22/40, C08F 222/40, C08K 5/3415, H01M 4/02

(54) **IONICALLY CONDUCTIVE POLYMERS FOR GEL POLYMER ELECTROLYTE, AND GEL POLYMER ELECTROLYTE COMPRISING SUCH AN IONICALLY CONDUCTIVE POLYMER**

(71) Applicant: Belenos Clean Power Holding AG, 2502 Biel/Bienne (CH)
(72) Inventor: MARTINEZ-IBANEZ, Maria, 01010 Vitoria-Gasteiz (ES); ARMAND, Michel, 75014 Paris (FR); SANTIAGO SANCHEZ, Alexander, 01200 Salvatierra/Agurain (ES); FRAILE INSAGURBE, David, 01010 Vitoria-Gasteiz (ES); SANCHEZ DIEZ, Eduardo, 48940 Leioa (ES); ALDALUR CEBERIO, Itziar, 20001 Donostia (ES); ZUGAZUA GANADO, Oihane, 01010 Vitoria-Gasteiz (ES); PEREGO, Daniele, 5400 Baden (CH); PORCARELLI, Luca, 4052 Basel (CH)
(74) Representative: ICB SA

(57) **Abstract**

The present invention relates to an ionically conductive polymer for a gel polymer electrolyte comprising m repeat units according to formula (I) and n repeat units according to formula (II) 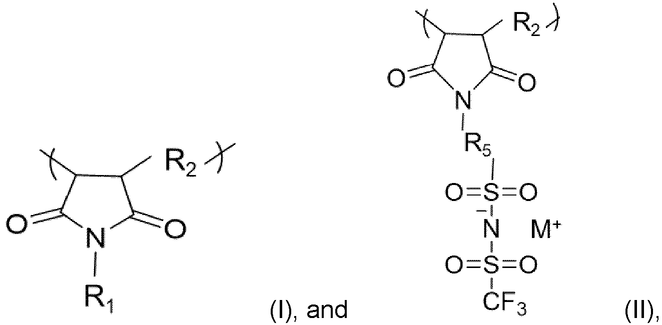 wherein R₁ is (CH₂)ₓ-R₃, wherein x is between 1 and 20 and R₃ is H or CN; R₂ and R₅, individually, are C₁-C₁₀ alkyl or C₂-C₁₀ alkenyl; M is an alkali metal or an alkaline earth metal; the ratio of m to n (m/n) is between 25:1 and 1:25; and m + n is q, wherein q is between 50 and 5000. The present invention further relates to a gel polymer electrolyte comprising the ionically conductive polymer, and to methods of producing the ionically conductive polymer.

## Description

### Technical field of the invention

The present invention relates to ionically conductive polymers for gel polymer electrolytes for a battery. The invention further relates to gel polymer electrolytes comprising such ionically conductive polymers, and to methods of producing the ionically conductive polymers.

### Background

Over the past decade, transitioning from liquid electrolytes in batteries to non-liquid electrolytes such as gel polymer electrolytes and solid electrolytes, has gained considerable attention. This shift offers significant advantages, such as enhanced safety by mitigating leakage and fire risks, as well as improved battery longevity and performance through increased structural stability and reduced degradation.

Gel polymer electrolytes (GPEs) have gained significant attention because of their unique combination of solid-like mechanical stability and liquid-like ionic conductivity. Polymer matrixes are an essential component in these electrolytes as they contribute to maintaining structural integrity while offering a certain flexibility to the electrolyte and enhance ionic conductivity, which contributes to improve the battery performance and longevity.

However, the ionic conductivity of gel polymer electrolytes, although better than solid electrolytes, is still lower than that of liquid electrolytes, which can limit the performance of the batteries comprising such gel polymer electrolytes. They also tend to suffer from issues related to long-term stability and compatibility with electrode materials, which can affect the efficiency and lifespan of the energy storage systems. Furthermore, the inclusion of plasticizers and optionally solvents can sometimes lead to phase separation or crystallization, which can degrade the performance of the GPEs over time.

US11848417 discloses a gel polymer electrolyte comprising a cross-linked network, an ionic liquid and one or more lithium salts. The cross-linked network is the reaction product of an inorganic polyhedral oligomeric silsesquioxane with a functionalized poly(ethylene glycol) or functionalized polyethylene oxide), and a an amine-terminated diterminal functionalized poly(ethylene glycol) or a an amine-terminated diterminal functionalized poly(ethylene oxide).

EP4372026 discloses an ionically conductive polymeric binder for binding an inorganic solid electrolyte together, thereby reducing the cathode/electrolyte interface resistance and enhancing the metal ion mobility. The electrolyte comprises such a polymeric binder and a metal ion, preferably a lithium ion. The polymer can be a polyester, polyethylene, anionic polymer, polycarbonate, silicone, for example a 3D cross-linked aliphatic polycarbonate.

### Summary of the invention

It is an aim of the present invention to overcome one or more of the foregoing drawbacks. It is an aim of the present invention to provide ionically conductive polymers for gel polymer electrolytes (GPEs), which combine an excellent ionic conductivity with a high thermal stability and resistance, and with an excellent resistance against high voltages (i.e. having a high oxidation stability).

Yet another aim of the present invention is to provide ionically conductive polymers for gel polymer electrolytes, wherein the electrolytes have a sufficient mechanical strength to render them self-standing (defined as being capable of being handled and manipulated without damage or degradation, and this without the need for a support), even for high amounts of plasticizer in the gel polymer electrolyte. A further aim is to provide ionically conductive polymers comprising a significantly reduced amount of halogen atoms and therefore being considered more sustainable.

It is an aim to produce such polymers by means of processes that limit the use of harmful solvents to a minimum, or even exclude the need for such solvents, i.e., more sustainable processes.

It is a further aim to provide gel polymer electrolytes (GPEs) comprising such an ionically conductive polymer which have an excellent mechanical and thermal stability in combination with an excellent ionic conductivity, in particular single-ion conductivity, even at high loading, resulting in a good rate capability and excellent cycling stability, while comprising a significantly reduced amount of halogen atoms when compared to state of the art GPEs. It is a particular aim to provide self-standing GPEs which can comprise significant amounts of plasticizer. It is another aim to provide less complex processes for producing such GPEs, in particular processes that do not need any post-curing in order to obtain render the GPE self-standing.

In the light of the present disclosure, when mentioning or referring to an electrolyte, the electrolyte is a gel polymer electrolyte (GPE). The term "gel polymer electrolyte" is used in the present disclosure for polymer electrolytes comprising a plasticizer.

A first aspect of the present invention discloses an ionically conductive polymer for a gel polymer electrolyte (GPE) as set out in the appended claims.

The ionically conductive polymer comprises m repeat units according to formula (I) 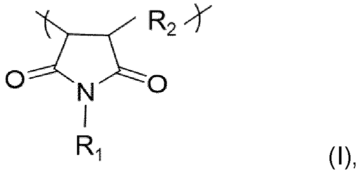 wherein R₁ is (CH₂)ₓ-R₃, wherein x is between 1 and 20, and R₃ is H or CN; and R₂ is C₁-C₁₀ alkyl or C₂-C₁₀ alkenyl.

The ionically conductive polymer further comprises n repeat units according to formula (II) 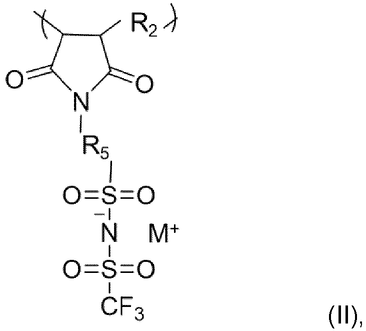 wherein R₂ and Rs, individually, are C₁-C₁₀ alkyl or C₂-C₁₀ alkenyl; and M is an alkali metal or an alkaline earth metal.

In other words, the ionically conductive polymer is a copolymer comprising m repeat units according to formula (I) and n repeat units according to formula (II).

The ratio of m to n, i.e. the ratio of the number of repeat units according to formula (I) to the number of repeat units according to formula (II), is between 25:1 to 1:25, preferably between 20:1 and 1:20, more preferably between 10:1 and 1:10, most preferably between 5:1 and 1:5, such as between 4:1 and 1:4, between 1:2 and 2:1, for example 1.4:1.

The total number of repeating units, m + n, or q, is between 50 and 5000, preferably between 75 and 4500, more preferably between 100 and 4000.

A first particularly preferred example of the ionically conductive polymer is a polymer wherein x is 6, R₃ is CN, R₂ is (CH₂)₂, R₅ is (CH₂)₂, and R₅ is (CH₂)₂. A second particularly preferred example of the ionically conductive polymer is a polymer wherein x is 10, R₃ is H and R₂ is (CH₂)₂, and R₅ is (CH₂)₂.

Advantageously, M is Li, Na or Mg, preferably Li.

The inventors have surprisingly discovered that the ionically conductive polymers of the invention, when used in a gel polymer electrolyte (GPE), act as a source of ions of the alkali metal or alkaline earth metal M, in particular Li, Na or Mg, preferably Li. This results in the inventive GPEs having an excellent single-ion conductivity, i.e., lithium ions are primarily responsible for the charge transport in the inventive GPEs and buildup of side reactions caused by other ionic species is reduced.

A second aspect of the present invention discloses a gel polymer electrolyte for a battery as set out in the appended claims. The gel polymer electrolyte comprises or substantially consists of an ionically conductive polymer according to the first aspect and a plasticizer.

Advantageously, the gel polymer electrolyte comprises between 10 % and 90 % by weight, preferably between 20 % and 80 % by weight, more preferably between 25 % and 75 % by weight, for example between 35 % and 65 % by weight of a plasticizer, based on the total weight of the gel polymer electrolyte.

Advantageously, the gel polymer electrolyte comprises between 90 % and 10 % by weight, preferably between 80 % and 20 % by weight, more preferably between 75 % and 25 % by weight, for example between 65 % and 35 % by weight of an ionically conductive polymer according to the first aspect of the invention, based on the total weight of the gel polymer electrolyte.

Advantageously, the gel polymer electrolyte comprises or substantially consists of between 10% and 90% by weight, preferably between 20 % and 80 % by weight, more preferably between 25 % and 75 % by weight, for example between 35 % and 65 % by weight of a plasticizer; and between 90 % and 10 % by weight, preferably between 80 % and 20 % by weight, more preferably between 75 % and 25 % by weight, for example between 65 % and 35 % by weight of an ionically conductive polymer according to the first aspect of the invention, based on the total weight of the gel polymer electrolyte.

Advantageously, the sum of the % by weight of the ionically conductive polymer and the % by weight of the plasticizer in the gel polymer electrolyte is 100 %, i.e. the gel polymer electrolyte advantageously substantially consists of an ionically conductive polymer according to the first aspect of the invention and a plasticizer. For example, the gel polymer electrolyte can consist of 40 % by weight of plasticizer and 60 % by weight of an inventive ionically conductive polymer.

The inventors have found that gel polymer electrolytes comprising equal to or lower than 10 % by weight, preferably equal to or lower than 15 % by weight, more preferably equal to or lower than 20 % by weight of plasticizer are fragile and have low mechanical strength, i.e. they easily break upon handling and having limited bending properties. It is believed that this is due to a limited amount of plasticizer.

It will be understood that the optimal amount of the plasticizer and of the ionically conductive polymer depend, amongst others, on the composition of the plasticizer (its structure), as well as on the structure of the polymer, more particularly the ratio of m to n, the composition of the repeat units, as well as the total number of repeat units (and thus the molecular weight of the polymer). Consequently, it is possible to provide gel polymer electrolytes having properties that can be modified in function of the application and requirements. In other words, an advantage of the ionically conductive polymers and of the gel polymer electrolytes of the present disclosure is that they offer a wide range of properties, and that they can be optimized in function of the requirements, not only by modifying the relative amounts of plasticizer and polymer, but also by modifying the structure of the polymer itself.

Advantageously, the ionically conductive polymer is at least partially present in the gel polymer electrolyte as a matrix, wherein the plasticizer is at least partially, and preferably substantially totally, dispersed within the matrix. More particularly, advantageously at least 20 %, preferably at least 25 %, more preferably 50 %, most preferably at least 75 %, such as at least 80 %, at least 90 %, at least 95 %, or substantially 100 % of the ionically conductive polymer is present in the gel polymer electrolyte as a matrix.

Advantageously, the plasticizer is propylene carbonate. Advantageously, the gel polymer electrolyte comprises or substantially consists of between 20 % and 60 % by weight of propylene carbonate and between 80 % and 40 % by weight of an ionically conductive polymer according to the first aspect, based on the total weight of the gel polymer electrolyte. Advantageously, the gel polymer electrolyte comprises a matrix of the ionically conductive polymer, with propylene carbonate as plasticizer dispersed within the matrix.

A third aspect of the present invention relates to a battery as set out in the appended claims. The battery comprising a gel polymer electrolyte of the second aspect. Advantageously, the battery is a secondary battery. Advantageously, the battery is a Li-ion battery.

A fourth aspect of the present invention discloses a method for producing an ionically conductive polymer as set out in the appended claims. The ionically conductive polymer is according to the first aspect of the present invention.

The method comprises reacting an amino-derivative according to H₂N-R₁, wherein R₁ is as hereinabove described, with a polymer comprising q repeat units according to formula (III) 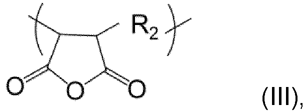 wherein R₂ is as hereinabove described and q is between 50 and 5000, preferably between 75 and 4500, more preferably between 100 and 4000.

The reaction takes place in the presence of dimethylformamide (DMF).

The reaction takes place at a temperature T₁ between 15 °C and 50 °C, more preferably between 15 °C and 30 °C, such as room temperature.

The reaction leads to the formation of a first intermediate polymer. Advantageously, the first intermediate polymer does not comprise a closed ring in its molecular structure, in particular no imide ring. Advantageously, the first intermediate polymer comprises n repeat units according to formula (III) and m repeat units according to formula (IV) 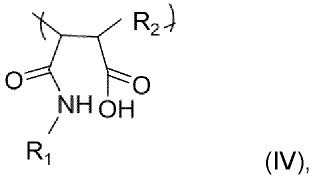 wherein m + n equals q; and the ratio of m to n is as hereinabove described.

The first intermediate polymer is then reacted with F₃CO₂SN⁻O₂S-R₄-NH₂ M⁺, wherein R₄ and M are as hereinabove described.

The reaction takes place in the presence of (DMF).

The reaction takes place at a temperature T₂ between 15 °C and 50 °C, more preferably between 15 °C and 30 °C, such as room temperature.

The reaction leads to the formation of a second intermediate polymer. Advantageously, the second intermediate polymer does not comprise a closed ring in its molecular structure, in particular no imide ring. Advantageously, the second intermediate polymer comprises m repeat units according to formula (IV) and n repeat units according to formula (V) 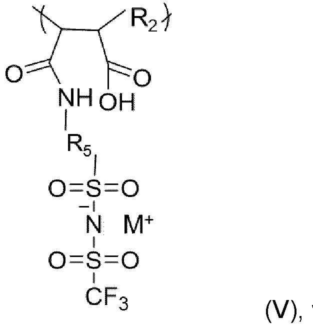 wherein m + n equals q; and the ratio of m to n is as hereinabove described.

The second intermediate polymer is then subjected to imide ring closing, thereby forming the ionically conductive polymer. The step of imide ring closing can be performed by heating the second intermediate polymer to a temperature T₃ higher than T₂, followed by increasing (i.e. further heating) the temperature from T₃ to a temperature T₄. Alternatively, the imide ring closing step can be performed at T₂ in the presence of a catalyst. In other words, using a catalyst for the imide ring closing can be performed without the requirement of heating the second intermediate polymer.

Advantageously, temperature T₃ is between 30 °C and 80 °C, preferably between 35 °C and 70 °C, more preferably between 40 °C and 60 °C, for example 50 °C.

Advantageously, temperature T₄ is between 100 °C and 250 °C, preferably between 125 °C and 200 °C, more preferably between 150 °C and 180 °C.

Advantageously, when the imide ring is closed by heating the second intermediate polymer, it is performed in the presence of DMF.

Advantageously, when the imide ring is closed in the presence of a catalyst, the catalyst comprises or substantially consists of carbonyldiimidazole.

The present disclosure is further related to the use of an ionically conductive polymer according to the first aspect in a mixture for producing a gel polymer electrolyte according to the second aspect.

### Description of the figures

Aspects of the invention will now be described in more detail with reference to the appended drawings, wherein same reference numerals illustrate same features and wherein:
- Figure 1 shows the H-NMR spectrum of a second ionically conductive polymer of the invention;
- Figure 2 shows the FTIR spectrum of the second polymer;
- Figure 3 shows the TGA analysis of the second polymer;
- Figure 4 shows the DSC analysis of the second polymer;
- Figure 5 shows the LSV analysis of the second polymer;
- Figures 6 and 7 show the thermal stability (resistance) for six inventive gel polymer electrolytes as measured by TGA;
- Figures 8 and 9 show the glass transition temperature for six inventive gel polymer electrolytes as measured by DSC;
- Figures 10 and 11 show the ionic conductivity for four inventive gel polymer electrolytes.

### Detailed description of the invention

The ionically conductive polymer is a copolymer and comprises m repeat units according to (I) and n repeat units according to formula (II): 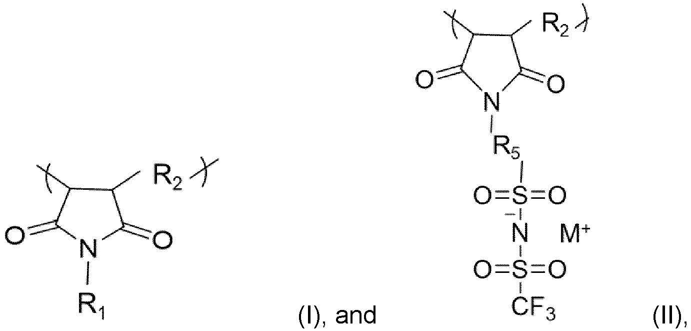 wherein
R₁ is (CH₂)ₓ-R₃, wherein x is between 1 and 20, preferably between 2 and 15, more preferably between 4 and 10, and wherein R₃ is H or CN;
R₂ and Rs, individually, are C₁-C₁₀ alkyl or C₂-C₁₀ alkenyl; and
M is an alkali metal or an alkaline earth metal.

Advantageously, m and n are selected so that the total number of repeat units, q, which is equal to m + n, is between 50 and 5000, preferably between 75 and 4500, more preferably between 100 and 4000.

Advantageously, m is between 5 and 4500, preferably between 10 and 3600. Advantageously, n is between 5 and 4500, preferably between 10 and 3600.

Advantageously, the molecular weight of the ionically conductive polymer of the present invention is between 10 and 3000 kDa, preferably between 11 and 2500 kDa, more preferably between 12 and 2000 kDa, most preferably between 13 and 1800 kDa.

It will be understood that the values for m and n, i.e. the number of repeat units according to formula (I) and formula (II), depend on the total number of repeat units, q, and the ratio of m to n, i.e. the ratio of the number of repeat units according to formula (I) to the number of repeat units according to formula (II). For example, when q is 3000 and m:n is 2:1, then the copolymer comprises 2000 repeat units according to formula (I) and 1000 repeat units according to formula (II). When q is 5000 and m:n is 1:1, then the copolymer comprises 2500 repeat units according to formula (I) and 2500 repeat units according to formula (II).

The repeat units according to formula (II) define the ionic conductivity of the polymer, whereas the repeat units according for formula (I) are responsible for the matrix forming properties, i.e. for containing the plasticizer in the gel polymer electrolytes of the invention. It will be understood that by changing the ratio of m to n, for a constant total number of repeat units, q, the ionic conductivity of the ionically conductive polymer can be varied. This offers a very versatile ionically conductive polymer, allowing to fine-tune its properties in function of the other components in the gel polymer electrolyte, in particular the plasticizer.

R₁ can be linear or branched, i.e. the (CH₂)ₓ-chain can be linear or branched. Advantageously, R₁, i.e. the (CH₂)ₓ-chain, is linear.

R₂ can be linear or branched. Advantageously, R₂ is a C₁-C₁₀ alkyl according to (CH₂)_{y} wherein y is between 1 and 10, preferably between 1 and 4, more preferably 1 or 2, i.e. CH₂ or (CH₂)₂.

R₅ can be linear or branched. Advantageously, R₂ is a C₁-C₁₀ alkyl according to (CH₂)_{w} wherein w is between 1 and 10, preferably between 1 and 4, more preferably 1 or 2, i.e. CH₂ or (CH₂)₂.

Advantageously, the copolymer is a random copolymer, i.e. a copolymer wherein the repeat units according to formulas (I) and (II) are distributed randomly. Alternatively, yet advantageously, the copolymer is a block copolymer, i.e. a copolymer comprising one or more "blocks" of repeat units according to formula (I), and one or more "blocks" of repeat units according to formula (II). An example of such a copolymer is represented by the structure of formula (VI): 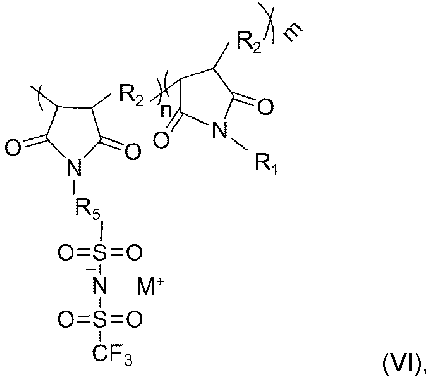 wherein the copolymer comprises one block of n repeat units according to formula (II) and one block of m repeat units according to formula (I).

An example of the ionically conductive polymer is a block copolymer wherein x is 6, R₃ is CN, R₂ is (CH₂)₂, and R₅ is (CH₂)₂, in particular wherein M is Li:

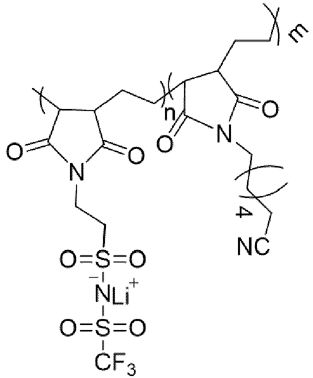

A second example of the ionically conductive polymer is a block copolymer wherein x is 10, R₃ is H, R₂ is (CH₂)₂, and R₅ is (CH₂)₂, in particular wherein M is Li:

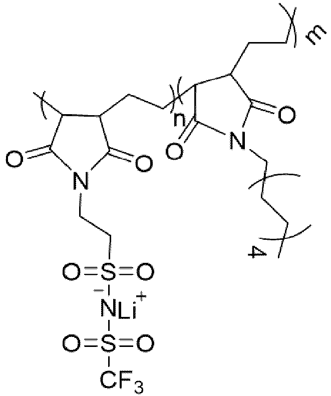

When x is 6, R₃ is CN and R₂ is (CH₂)₂, the first and the second intermediate polymer advantageously have a structure according to formulas (VII) and (VIII), respectively:

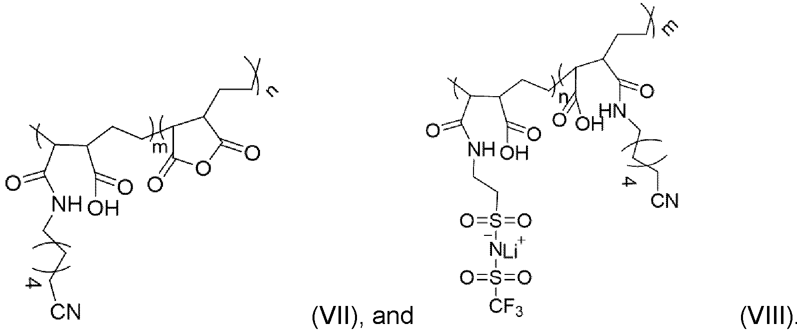

For example, when x is 10, R₃ is H and R₂ is (CH₂)₂, the first and the second intermediate polymer advantageously have a structure according to formulas (IX) and (X), respectively:

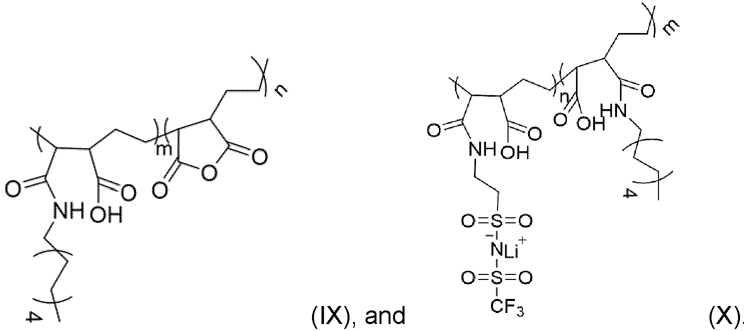

Advantageously, the inventive ionically conductive polymers have a high thermal resistance, i.e. they can withstand temperatures of at least 250 °C, preferably at least 300 °C, more preferably at least 350 °C, as measured by thermogravimetric analysis (TGA) at a heating rate of 10°C/min under Ar flow of 60 mL/min. The inventors have surprisingly found that the thermal resistance of the ionically conductive polymers does not change significantly when varying the ratio of m to n of the polymer.

It will be understood that the ionically conductive polymers have a glass transition temperature which is defined by the number of repeating units of formula (I) and of formula (II), and more particularly by the ratio of repeating units, m to n. Advantageously, the glass transition temperature of the inventive polymers is between 30 °C and 175 °C, preferably between 50 °C and 150 °C, more preferably between 80 °C and 120 °C, for example between 90 °C and 110 °C, as measured by differential scanning calorimetry (DSC) at a heating scan of 10°C/min from -80 °C to more than 200 °C for two cycles under an Ar atmosphere, wherein the results are taken in the second cycle to ensure that the thermal history of the polymer has been erased, thereby ensuring a reliable and reproducible value for the glass transition temperature. It will be understood that the exact glass transition temperature of the ionically conductive polymer depends on the ratio m to n.

Advantageously, the ionically conductive polymers have a high oxidation stability of at least 2.5 V, preferably at least 3 V, more preferably at least 4 V, such as at least 4.5 V, as measured by linear sweep voltammetry (LSV) analysis measured at 1 mV s⁻¹ in propylene carbonate solution at room temperature.

Gel polymer electrolytes according to the present invention comprise or substantially consist of an ionically conductive polymer of the invention and a plasticizer.

The plasticizer can be any organic solvent known in the art. Nonlimiting examples of suitable plasticizers include linear carbonates, cyclic carbonates, ethers, and nitriles. Preferred plasticizers used with the ionically conductive polymers of the invention include propylene carbonate and ethylene carbonate, preferably propylene carbonate.

Gel polymer electrolytes according to the present invention can be made by methods known in the art. A preferred method comprises preparing a mixture comprising the ionically conductive polymer, the plasticizer and a solvent, solvent casting of the mixture, followed by evaporation of the solvent used for the mixture preparation, and optionally drying. Another exemplary method is a so-called dry method, comprising mixing the ionically conductive polymer and the plasticizer, followed by extrusion of the mixture, optionally followed by calandering or lamination. Advantageously, the manufacturing process for the gel polymer electrolytes of the invention do not require a curing step as last step to render the electrolyte self-standing.

The inventors have surprisingly discovered that the gel polymer electrolytes of the present disclosure have a lithium-ion transference number (LTN) close to unity (1) when M in the repeat unit according to formula (II) of the ionically conductive polymer is lithium. In other words, lithium ions are primarily responsible for the charge transport in the inventive gel polymer electrolytes and buildup of side reactions caused by other ionic species is reduced, i.e., the gel polymer electrolyte has an excellent single-ion conductivity. Said differently, the inventive gel polymer electrolytes allow for a homogeneous deposition of lithium and a reduction of the polarization of the system, improving both efficiency and cycling stability in a battery cell comprising the gel polymer electrolyte. Without wishing to be bound by any theory, the inventors believe that this is the result of the ionically conductive polymer comprising Li (M is Li in formula (II)). The same was noticed when M was another alkali metal or earth alkaline metal, such as Na or Mg, with the effect being most pronounced for Li.

Advantageously, the inventive gel polymer electrolytes have a good thermal resistance, i.e. they can withstand temperatures of at least 100 °C, preferably at least 120 °C, more preferably at least 130 °C, as measured by TGA at 10 °C/min under an Ar flow of 60 mL/min. Advantageously, the thermal resistance depends on the nature of the plasticizer (i.e. its chemical structure) in the electrolyte. Consequently, depending on the required thermal resistance, the plasticizer used in the gel polymer electrolyte can be varied.

It will be understood that the glass transition temperature of the gel polymer electrolytes depends on the amount of plasticizer, since a plasticizer is used to reduce the fragility of a polymeric material, which is realised by a decrease in the glass transition temperature. Advantageously, the gel polymer electrolytes have a glass transition temperature between unmeasurable values (high amount plasticizer) and the glass transition temperature of the ionically conductive polymer (no plasticizer).

It will also be understood that the ionic conductivity of the gel polymer electrolytes is higher than the ionic conductivity of the ionically conductive polymer, an effect that is attributed to the presence of a plasticizer rendering the gel polymer electrolyte more flexible. In other words, the ionic conductivity of the gel polymer electrolytes increases with an increasing amount of plasticizer.

Advantageously, the gel polymer electrolytes have an ionic conductivity at room temperature (25 °C) of equal to or higher than 10⁻⁶ S/cm, preferably equal to or higher than 5 * 10⁻⁶ S/cm, such as equal to or higher than 10⁻⁵ S/cm or equal to or higher than 5 * 10⁻⁵ S/cm.

Advantageously, the gel polymer electrolytes have an ionic conductivity at 70 °C of equal to or higher than 10⁻⁵ S/cm, preferably equal to or higher than 2 * 10⁻⁵ S/cm, such as equal to or higher than 5 * 10⁻⁵ S/cm or equal to or higher than 10⁻⁴ S/cm.

### Examples

### Example 1

H₂N-(CH₂)₉-CH₃ as amino-derivative was reacted with a polymer comprising q repeating units 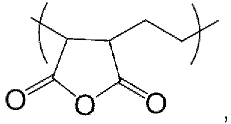 wherein q was between 100 and 4000, for 2 hours at room temperature in the presence of DMF. The obtained intermediate polymer was then reacted with F₃CO₂SN⁻O₂S(CH₂)₂NH₂ Li⁺ for 2 hours at room temperature in the presence of DMF. The obtained reaction product was then first heated to 50 °C for 4 hours in the presence of DMF, and then further heated to 170 °C for 16 hours in the presence of DMF.

The obtained ionically conductive polymer had a ratio of m to n of 1.4:1. A second polymer was prepared in the same way, having a ratio of m to n of 1:2.85.

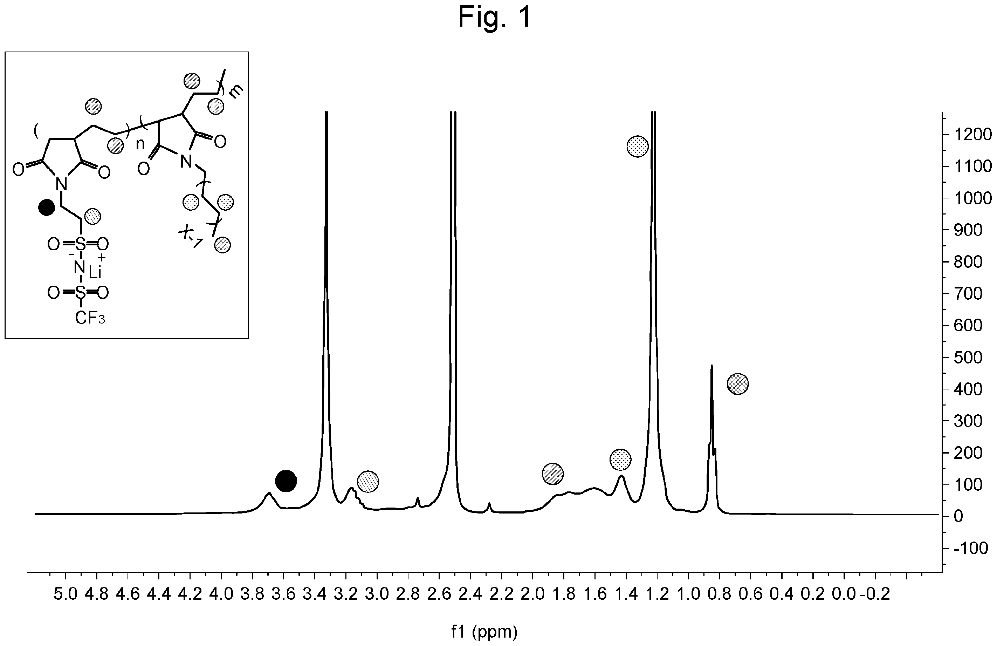

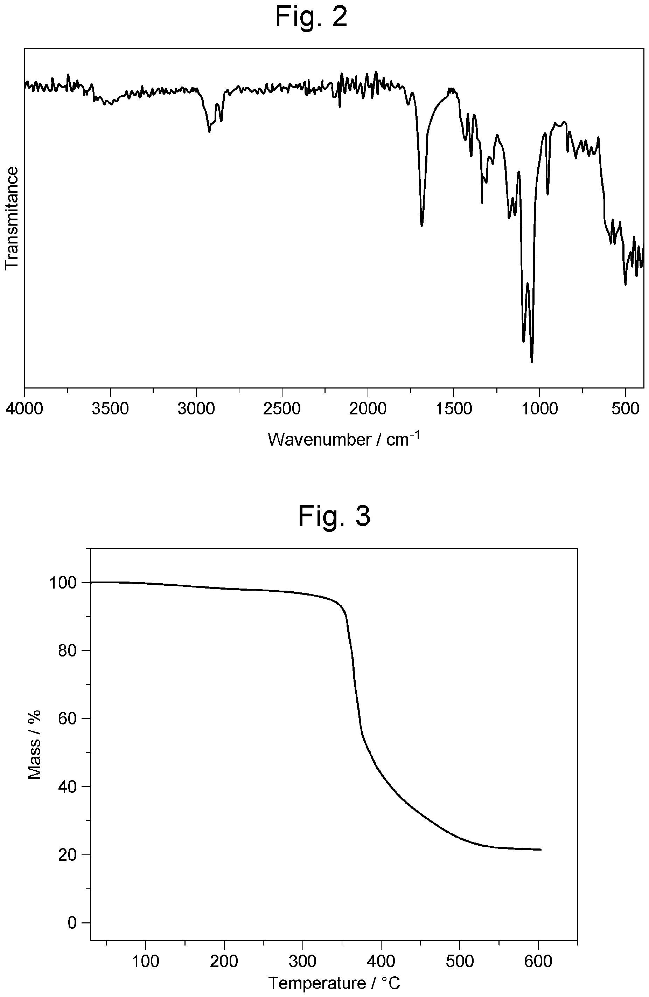

Figs. 1 and 2 show the H-NMR spectrum and the FTIR spectrum of the obtained ionically conductive polymer with a m/n ratio of 1.4:1, respectively.

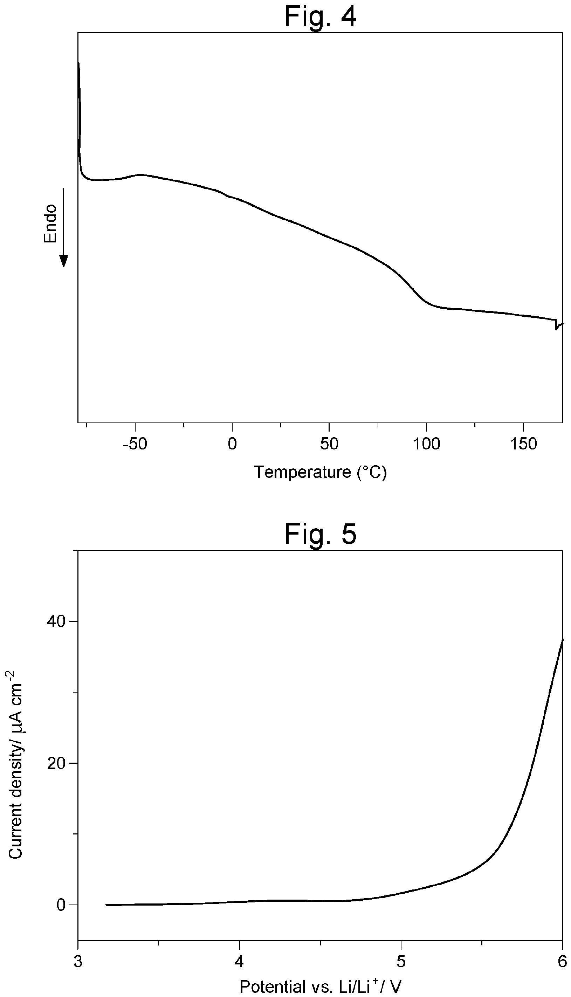

Fig. 3 shows the TGA analysis of the polymer with a m/n ratio of 1.4:1, indicating a high thermal resistance surpassing 300 °C. Fig. 4 shows the DSC analysis of the polymer with a m/n ratio of 1.4:1, indicating a glass transition temperature of 91 °C. Fig. 5 shows the LSV analysis of the polymer with a m/n ratio of 1.4:1, indicating a high oxidation stability of at least 5 V.

### Example 2

The two ionically conductive polymers of Example 1 (m/n ratio 1.4:1 and 1:2.85) were used to produce a gel polymer electrolyte by mixing each polymer with propylene carbonate as plasticizer in a solvent, followed by casting on a teflon substrate, evaporation of the solvent and drying the obtained gel polymer electrolytes. Propylene carbonate was used in three different amounts: 20 wt.% (80 wt.% polymer), 40 wt.% (60 wt.% polymer) and 60 wt.% (40 wt.% polymer).

For both ionically conductive polymers, the gel polymer electrolytes containing 20 wt.% propylene carbonate were found to be fragile, while the gel polymer electrolytes containing 60 wt.% propylene carbonate were found to be very sticky and they even tended to flow. The gel polymer electrolytes containing 40 wt.% propylene carbonate were found to be sticky, but could be manipulated, especially for the gel polymer electrolyte comprising the polymer with the m/n ratio of 1:2.85.

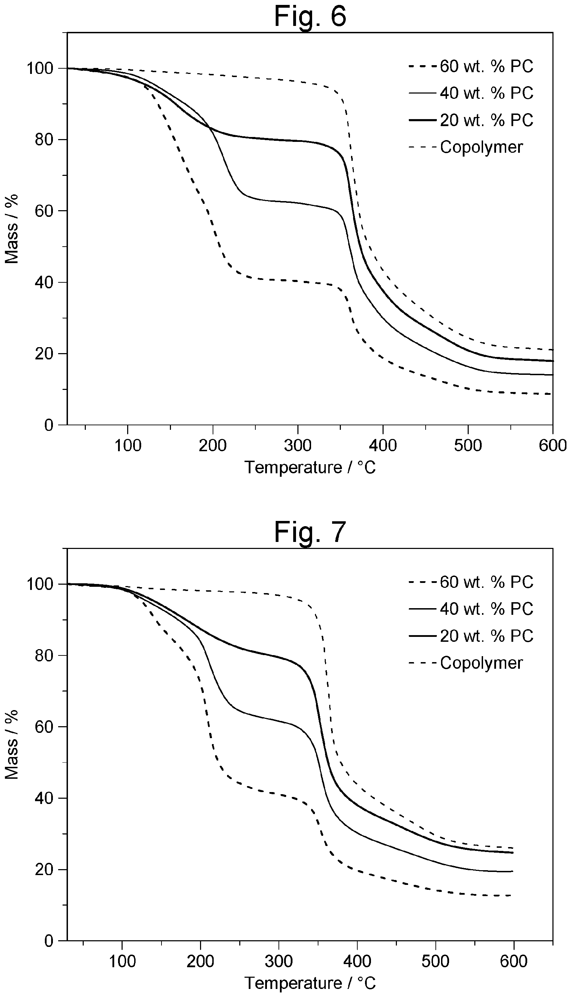

The thermal stability of all six gel polymer electrolytes (three ratios of plasticizer/polymer, and two m/n ratios for the polymer) was tested by means of TGA. Figs. 6 and 7 show the results for the electrolytes with the polymer having a m/n ratio of 1.4:1 and 1:2.85, respectively, in function of the wt.% of propylene carbonate ("PC"). The TGA profile (mass loss in function of the temperature) of the polymer is also shown as reference ("Copolymer"). The temperature of thermal stability is defined as the temperature at which a 5 % loss in mass of the gel polymer electrolyte was measured. All six electrolytes are stable for temperatures of at least 130°C. The thermal stability was noticed to decrease with an increasing amount of propylene carbonate, whereas the impact of the m/n ratio of the ionically conductive polymer was found to be limited.

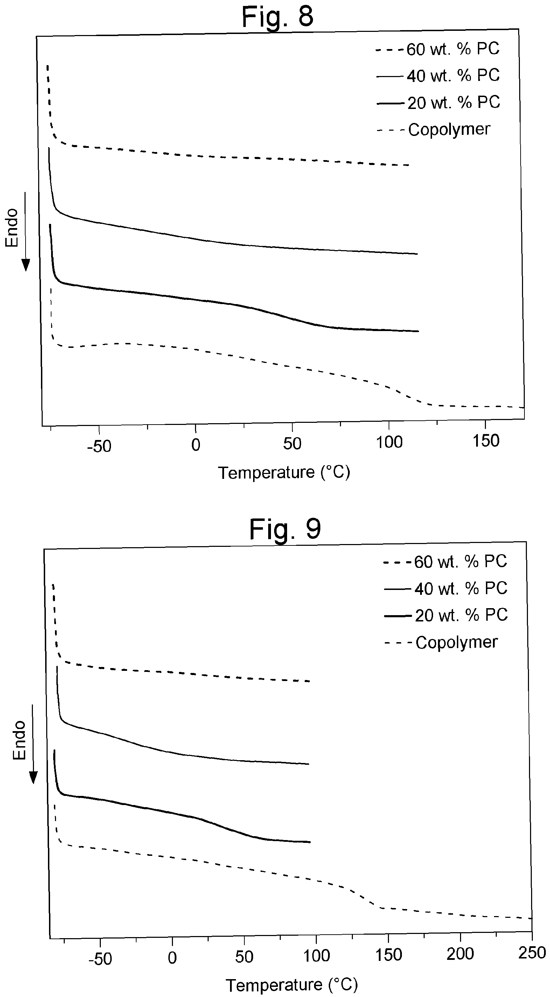

The glass transition temperature (T_{g}) of the same six gel polymer electrolytes was also tested, by DSC. Figs. 8 and 9 show the results for the electrolytes with the polymer having a m/n ratio of 1.4:1 and 1:2.85, respectively, in function of the wt.% of propylene carbonate ("PC"). The DSC profile of the polymer is also shown as reference ("Copolymer"). Since the plasticizer (propylene carbonate) plasticizes the system, it decreases the T_{g} of the electrolyte when compared to the polymer only ("Copolymer"), with more propylene carbonate thus resulting in a lower T_{g}. For the electrolytes with 60 wt.% propylene carbonate, it was not possible to determine the T_{g}. For the electrolyte comprising the polymer with m/n 1.4:1, the T_{g} of the polymer only was 91 °C, for the electrolyte with 20 wt.% and 40 wt.% propylene carbonate it was 42 °C and 6 °C, respectively. For the electrolyte comprising the polymer with m/n 1:2.85, the T_{g} of the polymer only was 135 °C, for the electrolyte with 20 wt.% and 40 wt.% propylene carbonate it was 52 °C and 27 °C, respectively. In other words, a polymer with relatively speaking more repeat units according to formula (II) has a positive impact on the T_{g}. It is believed that this is because the repeat units of formula (I) contribute to the flexibility of the polymer, whereas the repeat units of formula (II) do not contribute much to the flexibility thereof.

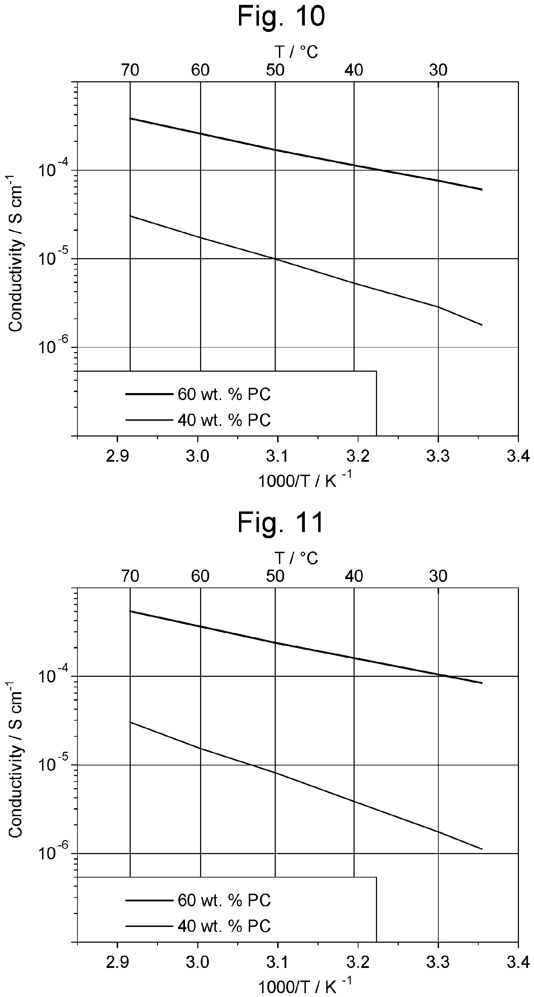

The ionic conductivity of four gel polymer electrolytes was also measured at temperatures between 25 °C and 70 °C. The tested electrolytes where those comprising 40 wt.% and 60 wt.% propylene carbonate, and having a polymer with a m/n ratio of 1.4:1 and of 1:2.85. Figs. 10 and 11 show the results for the electrolytes with the polymer having a m/n ratio of 1.4:1 and 1:2.85, respectively, in function of the wt.% of propylene carbonate ("PC"). The gel polymer electrolytes comprising 40 wt.% propylene carbonate showed rather low ionic conductivities below 5 * 10⁻⁶ S/cm at 25 °C and lower than 5 * 10⁻⁵ S/cm at 70 °C, while the ones with 60 wt.% propylene carbonate showed excellent ionic conductivities higher than 5 * 10⁻⁵ S/cm and even around 10⁻⁴ S/cm at 25 °C, and higher than 5 * 10⁻⁴ S/cm at 70 °C.

## Claims

1. An ionically conductive polymer for a gel polymer electrolyte comprising m repeat units according to formula (I) and n repeat units according to formula (II) 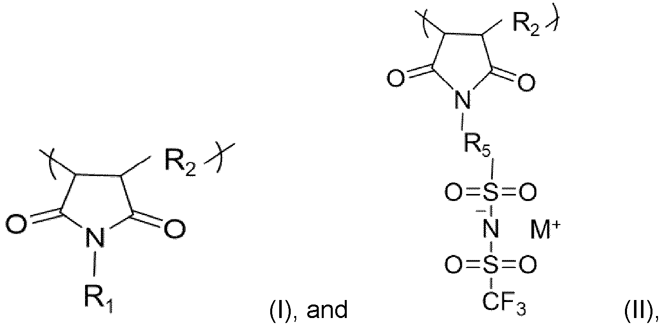 wherein
R₁ is (CH₂)ₓ-R₃, wherein x is between 1 and 20 and R₃ is H or CN;
R₂ and R₅, individually, are C₁-C₁₀ alkyl or C₂-C₁₀ alkenyl;
M is an alkali metal or an alkaline earth metal;
the ratio of m to n (m/n) is between 25:1 and 1:25; and
m + n is q, wherein q is between 50 and 5000.

2. The ionically conductive polymer according to claim 1, wherein x is 6, R₃ is CN, R₂ is (CH₂)₂, and R₅ is (CH₂)₂.

3. The ionically conductive polymer according to claim 1, wherein x is 10, R₃ is H and R₂ is (CH₂)₂, and R₅ is (CH₂)₂.

4. The ionically conductive polymer according to any one of the preceding claims, wherein M is Li, Na or Mg, preferably Li.

5. The ionically conductive polymer according to any one of the preceding claims, wherein m/n is between 10:1 and 1:10, preferably between 5:1 and 1:5.

6. A gel polymer electrolyte comprising an ionically conductive polymer according to any one of the preceding claims and a plasticizer.

7. The gel polymer electrolyte according to claim 6, wherein the ionically conductive polymer is at least partially present as a matrix, and wherein the plasticizer is dispersed within the matrix.

8. The gel polymer electrolyte according to any one of claims 6 to 7, comprising between 10 % and 80 % by weight of the plasticizer and between 90 % and 20 % by weight of the ionically conductive polymer, based on the total weight of the gel polymer electrolyte.

9. The gel polymer electrolyte according to any one of claims 6 to 8, wherein the plasticizer comprises propylene carbonate.

10. The gel polymer electrolyte according to claim 9, comprising between 20 % and 60 % by weight propylene carbonate and between 80 % and 40 % by weight of the ionically conductive polymer, based on the total weight of the gel polymer electrolyte.

11. A battery comprising the gel polymer electrolyte according to any one of claims 6 to 10, preferably wherein the battery is a Li-ion secondary battery.

12. A method for producing an ionically conductive polymer of any one of claims 1 to 5, comprising:
- reacting an amino-derivative according to H₂N-R₁, wherein R₁ is (CH₂)ₓ-R₃, wherein x is between 1 and 20 and R₃ is H or CN, with a polymer comprising q repeat units according to formula (III) 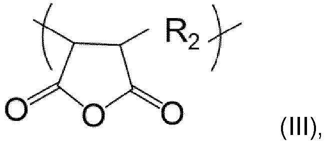 wherein R₂ is C₁-C₁₀ alkyl or C₂-C₁₀ alkenyl; and q is between 50 and 5000,
- in the presence of dimethylformamide (DMF) at a temperature T₁ between 15 °C and 50 °C, thereby forming a first intermediate polymer,
- reacting the first intermediate polymer with F₃CO₂SN⁻O₂S-R₅-NH₂ M⁺, wherein R₅ is a C₁-C₁₀ alkyl or a C₂-C₁₀ alkenyl and M is an alkali metal or an alkaline earth metal, in the presence of DMF at a temperature T₂ between 15 °C and 50 °C, thereby forming a second intermediate polymer,
- imide ring closing of the second intermediate polymer, thereby forming the ionically conductive polymer
wherein the imide ring closing is performed by heating the second intermediate polymer, in the presence of DMF, to a temperature T₃ between 30 °C and 80 °C, followed by increasing the temperature from T₃ to a temperature T₄ between 100 °C and 250 °C, or is performed in the presence of a catalyst at T₂.

13. The method of claim 12, wherein the first intermediate polymer comprises n repeat units according to formula (III) and m repeat units according to formula (IV) 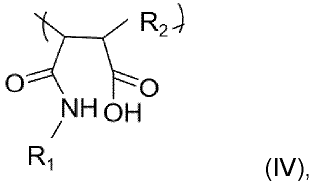 wherein
m + n equals q; and
the ratio of m to n is between 25:1 and 1:25.

14. The method according to claim 13, wherein the second intermediate polymer comprises m repeat units according to formula (IV) and n repeat units according to formula (V) 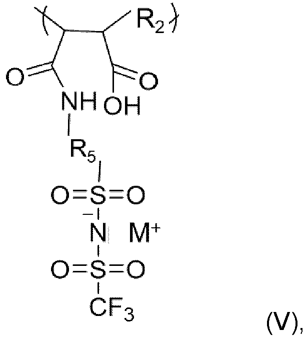 wherein
m + n equals q; and
the ratio of m to n is between 25:1 and 1:25.

15. The method according to any one of claims 11 to 14, wherein M is Li, Na or Mg.

16. The method according to any one of claims 11 to 15, wherein the imide ring is closed in the presence of a catalyst at T₂, wherein the catalyst comprises carbonyldiimidazole.
